# EUROPÄISCHE PATENTSCHRIFT

(11) **EP 3 646 725 B1**
(45) Veröffentlichungstag und Bekanntmachung des Hinweises auf die Patenterteilung: **08.05.2024**
(21) Anmeldenummer: 18203920.6
(22) Anmeldetag: 01.11.2018
(51) Int. Cl.: A01M 7/00

(54) **AGRARE AUSBRINGEINRICHTUNG UND VERFAHREN ZUM BETRIEB DERSELBEN**
AGRICULTURAL APPLICATION DEVICE AND METHOD FOR OPERATING THE SAME
DISPOSITIF D'ÉPANDAGE AGRICOLE ET SON PROCÉDÉ DE FONCTIONNEMENT

(43) Veröffentlichungstag der Anmeldung: 06.05.2020
(73) Patentinhaber: Schulte, Reinhold, 33106 Paderborn (DE)
(72) Erfinder: Schulte, Reinhold, 33106 Paderborn (DE)
(74) Vertreter: REHBERG HÜPPE + PARTNER

(56) Entgegenhaltungen:
- EP-A1- 1 289 668
- EP-B1- 1 289 668
- KR-A- 20100 120 388
- US-A- 3 782 634
- US-A- 4 177 674
- US-A- 5 475 614
- US-A1- 2018 042 215

## Beschreibung

### TECHNISCHES GEBIET DER ERFINDUNG

Die Erfindung betrifft eine agrare Ausbringeinrichtung, die zum Ausbringen eines Fluids (insbesondere eines Pflanzenschutzmittels, eines flüssigen Düngers, eines Insektizids u. ä.) in der Landwirtschaft dient. In einer derartigen agraren Ausbringeinrichtung wird das agrare Fluid über mehrere verteilt angeordnete Ausbringöffnungen ausgebracht, die über ein fluidischen Versorgungsleitungssystem mit Fluid versorgt werden. Hierbei weist das Versorgungsleitungssystem eine Sammelleitung auf, von der mehrere Ausbringleitungen abzweigen, die dann zu den Ausbringöffnungen führen. Die Ausbringöffnung kann dabei Bestandteil einer Ausbringventileinrichtung oder einer so genannten Feldspritze oder Spritzdüse sein.

### STAND DER TECHNIK

Eine gattungsgemäße agrare Ausbringeinrichtung ist aus DE 10 2006 008 612 A1 bekannt. Hier verzweigt eine aus einem Tank mit dem agraren Fluid versorgte Sammelleitung in mehrere Ausbringleitungen, die jeweils einer Teilbreite zugeordnet sind. Von den Ausbringleitungen zweigen wiederum Leitungen ab, über die über die Teilbreite verteilt angeordnete Spritzdüsen mit dem agraren Fluid versorgt werden. Die Aufteilung des Volumenstroms des agraren Fluids von der Sammelleitung in die Ausbringleitungen erfolgt über in den Ausbringleitungen jeweils angeordnete motorisch betätigbare Drossel- oder Abschaltventile, die von einem Bordcomputer zentral angesteuert werden können. Die Ausbringleitungen sind zusätzlich an eine Rückführleitung zu dem Tank angeschlossen, so dass unabhängig von der Ausbringung des agraren Fluids über die den jeweiligen Teilbreiten zugeordneten Ausbringdüsen das Fluid in einem Kreislauf gefördert werden kann, in dem überschüssiges agrares Fluid über die Rückführleitung wieder dem Tank zugeführt wird. In der Sammelleitung einerseits und der Rückführleitung andererseits sind Durchflussmesser angeordnet, deren Messsignale dem Bordcomputer zugeführt werden. Der Bordcomputer ermittelt durch eine Differenzbildung der Messsignale den Durchfluss (der auch aus Ausbringrate bezeichnet werden kann) für die Ausbringung des Fluids durch die Ausbringdüsen.

DE 696 25 914 T2 offenbart eine agrare Ausbringeinrichtung, wobei in dieser Druckschrift besonderes Augenmerk der unabhängigen Steuerung der Ausbringung über die einzelnen Ausbringöffnungen, hier insbesondere der Sprühtropfengröße und der Zuführrate gewidmet ist. Die Druckschrift beschreibt Probleme bei einem Sprühen aus einer Ausbringöffnung infolge einer Drift der Sprühtropfen, die zu einer Übersprühung führen kann mit einer Vergeudung von agrarem Fluid und einer Gefährdung der Natur oder des Menschen, einer Beschädigung benachbarter Ernte, einer Gesundheitsgefährdung eines Viehbestandes u. ä. Eine Verschärfung dieser Probleme ergibt sich bei einer Vergrößerung der agraren Ausbringeinrichtung, Erweiterung der Sprühbreite, Einsatz der agraren Ausbringeinrichtung an Fahrzeugen mit hohen Geschwindigkeiten, dem Einsatz der agraren Ausbringeinrichtung an einem Flugzeug u. ä. Als bekannt dargestellt wird in der Druckschrift der Einsatz eines Sprühbalkens, an welchem die Ausbringöffnungen über die Breite verteilt angeordnet sind, mit automatischer Steuerung der Höhe des Sprühbalkens über dem Boden. Ebenfalls als bekannt beschrieben wird die Ausgestaltung der agraren Ausbringeinrichtung als elektrisch betätigbares und steuerbares Durchflusssteuersystem, bei welchem den Ausbringöffnungen als Magnetventile ausgebildete Ausbringventileinrichtungen vorgeordnet sind. Die Magnetventile werden mittels einer Pulsweitenmodulation mit Rechteckimpulsen betätigt, deren Frequenz und Arbeitszyklus oder Tastverhältnis für die Steuerung der Ausbringrate über die auch Sprühdüsen ausgebildeten Ausbringöffnungen geändert werden kann. Bei konstantem Bereitstellungsdruck des agraren Fluids soll die volumetrische Durchflussrate veränderbar sein, ohne dass sich eine Tropfengröße oder ein Sprühmuster ändert. Ebenfalls als bekannt beschrieben wird die Ablage von Felddarstellungen mit digitalen Informationen über die verschiedenen Bodentypen in einem rechnergestützten Steuersystem, womit Sprühmittel, hier Dünger, entsprechend den optimalen Zuführungen für die verschiedenen, in einem Feld angetroffenen Bodenbedingungen bemessen und verteilt werden können. Eine Anpassung der Ausbringrate des agraren Fluids kann automatisch für die Fahrzeuggeschwindigkeit eingestellt werden. Ebenfalls bekannt ist die Steuerung der Ausbringung des agraren Fluids auf Grundlage von Global-Positioning-Systemen (GPS). Die Druckschrift beschreibt ein Sprühfahrzeug mit einer agraren Ausbringeinrichtung, die einen Tank und mehrere Ausleger aufweist. Die Ausleger verfügen über eine Sammelleitung, in der über einen Druckregler ein Betriebsdruck eingestellt wird. Der Sammelleitung wird das agrare Fluid über eine Pumpe aus einem Tank zugeführt. Im Falle eines zu hohen Drucks wird hier das agrare Fluid über eine Rückführleitung in den Tank zurückgeführt. In der Sammelleitung ist ein verstellbares Drosselventil vorgesehen. Die Durchflussrate und der Druck des agraren Fluids werden durch einen in der Sammelleitung angeordneten Druckmesser oder einen Druckgeber überwacht. Die die Ausbringöffnungen aufweisenden Düsenanordnungen können zur individuellen Steuerung mit mehreren Drosselventilen verbunden sein, wodurch je Düsenanordnung das agrare Fluid mit einem bestimmten Spektrum der mittleren Tropfengröße ausgegeben werden kann. Über eine zentrale Steuereinheit kann eine unabhängige Steuerung der Durchflussrate und der Tropfengröße für die jeweiligen Düsenanordnungen erfolgen. Hierbei kommuniziert die zentrale Steuereinheit mit den Magnetventilen der Düsenanordnungen über ein Bussystem, wobei auch möglich ist, dass die Düsenanordnungen interaktiv und vernetzt sind zum Austausch von Daten zwischen diesen und der Steuereinheit. Für einen eingesetzten Typ eines in Serienfertigung hergestellten Magnetventils können Daten hinsichtlich der generalisierten Eigenschaften dieses Typs vom Hersteller geliefert werden. Die mittlere Tropfengröße ist nichtlinear von dem Zuführdruck des agraren Fluids abhängig, wobei die mittlere Tropfengröße mit Abnahme des Drucks abnimmt. Gemäß der Druckschrift soll eine unabhängige Steuerung der Einstellpunkte der Durchflussrate und der Tropfengröße ermöglicht werden durch geeignete Änderungen in den Einstellpunkten der Arbeitszyklen und des Drucks des agraren Fluids, wozu geeignete Tabellen oder funktionale Abhängigkeiten berücksichtigt werden können, die in einer Speichereinheit gespeichert sein können. Ebenfalls vorgeschlagen wird, das tatsächliche Sprühverhalten an einem Einstellpunkt mit einem gewünschten Sprühverhalten zu vergleichen und die Einstellpunkte für die Zuführrate der Sprühflüssigkeit und die Tropfengröße im Bedarfsfall anzupassen.

EP 2 227 949 B2 beschreibt die Problematik, dass einer Ausbringöffnung vorgeordnete Magnetventile in Serienfertigung hergestellt werden, wobei von dem Hersteller Daten hinsichtlich der charakteristischen Eigenschaften des Magnetventils oder eines Düsenkopfes, in dem das Magnetventil Einsatz findet, verfügbar sind. Diese Daten betreffen aber selektive Messergebnis eines einzigen, aus einer größeren Gruppe von serienmäßig produzierten Düsenköpfen herausgegriffenen spezifischen Düsenkopfes, der als repräsentativ für sämtliche Serienprodukte oder allenfalls für die gemittelten Eigenschaft mehrerer geprüfter Düsenköpfe angenommen wird. Damit hängt letztendlich die Genauigkeit der Einhaltung des gewünschten Ausbringverhaltens eines Magnetventils oder eines Düsenkopfes ab von der Fertigungsgenauigkeit derselben bzw. der fertigungsbedingten Abweichung des Magnetventils oder Düsenkopfes von dem tatsächlich geprüften Ventil, auf dessen Grundlage die Daten vom Hersteller bereitgestellt sind. Soll das Ausbringverhalten innerhalb fest vorgegebener Grenzen vorgebbar sein, bedingt dies enge Toleranzen für die Fertigung des Ventils in einer Serienfertigung. Kommt es tatsächlich zu Abweichungen des Ausbringverhaltens von einem Soll-Ausbringverhalten, kann diesen Abweichungen lediglich dadurch Rechnung getragen werden, dass im Betrieb das tatsächliche Ausbringverhalten mit dem gewünschten Ausbringverhalten verglichen wird und eine aufwendige Nachregelung der Einstellpunkte erfolgt. EP 2 227 949 B2 schlägt vor diesem Hintergrund vor, ein Magnetventil, einen Düsenkopf, ein pulsmoduliertes Ventil mit einem darin eingesetzten schwingenden Quarz als Taktgeber u. U. mit geringen Anforderungen an die Fertigungstoleranzen (beispielsweise hinsichtlich der Öffnungs- und Durchlassgeometrien, der Stellwege des Ventils und/oder der Frequenz des Quarzes) herzustellen, womit die Kosten drastisch reduziert werden. Dem Düsenkopf oder Magnetventil wird dann aber eine Kalibriereinheit zugeordnet. Über die Kalibriereinheit kann werkseitig, turnusgemäß in einer Werkstatt oder im Betrieb der agraren Ausbringeinrichtung eine für dieses Magnetventil oder diesen Düsenkopf spezifische Kalibrierung derart erfolgen, dass eine Abhängigkeit oder ein Kennfeld ermittelt wird, welches oder welche die Abhängigkeit der unterschiedlichen Ausbringgrößen von Parametern der Pulsmodulation und/oder Betriebs- oder Umgebungsparametern abbildet. Hierdurch kann bei geringen Kosten die Abweichung der Ist-Ausbringung des Düsenkopfes von der Soll-Ausbringung reduziert werden, was wiederum zu einer Kostenreduktion infolge der Reduzierung des ausgebrachten agraren Fluids, einer Erhöhung des agraren Ertrags und/oder einer Schonung der Umwelt führen kann.

Die Veröffentlichung
**"**Equipment and calibration: low-pressure sprayers" der Autoren L. E. Bode und B. J. Butler; Circular 1192, University of Illinois at Urbana-Champaign, College ofAgriculture, Cooperative Extension Service, Mai 1981 beschreibt die Überprüfung eines Düsenkopfes dahingehend, ob dieser bei der bestimmungsgemäßen Ansteuerung und Bereitstellung des agraren Fluids unter dem bestimmungsgemäßen Druck auch die bestimmungsgemäße Ausbringung des agraren Fluids erzeugt, dadurch, dass ein Tank mit Wasser befüllt wird, sämtliche Düsenköpfe bestimmungsgemäß angesteuert und versorgt werden und unter den Düsenköpfen jeweils separate Behälter aufgestellt werden. Stimmt das Ausbringverhalten der Düsenköpfe überein, kann dies daran festgestellt werden, dass sämtliche Behälter gleich schnell gefüllt werden und nach einer vorgegebenen Zeitspannung mit demselben Volumen gefüllt sind. Möglich ist auch, dass lediglich die Ausbringung des Fluids durch einen Düsenkopf dadurch kontrolliert wird, dass das agrare Fluid in einem einzigen Behälter aufgefangen wird, wobei dann das in einer vorgegebenen Zeitspanne ausgebrachte Volumen mit einem Soll-Volumen verglichen wird. Ein Austausch des Düsenkopfes soll erfolgen, wenn sich das ausgebrachte Volumen um mehr als 10 % verändert hat. Eine Kalibrierung soll im Abstand von wenigen Tagen wiederholt werden oder bei einem Wechsel des Typs des auszubringenden agraren Fluids.

Weiterer Stand der Technik ist aus EP 1 289 668 A1, US 4,177,674 A, KR 2010 0120388 A, US 3,782,634 A, US 5,475,614 A und US 2018/042215 A1 bekannt.

### AUFGABE DER ERFINDUNG

Der Erfindung liegt die Aufgabe zugrunde, eine agrare Ausbringeinrichtung und ein Verfahren zum Betrieb derselben vorzuschlagen, welche oder welches hinsichtlich einer Bestimmung und/oder Überwachung eines Ausbringverhaltens verbessert ist.

### LÖSUNG

Die Aufgabe der Erfindung wird erfindungsgemäß mit den Merkmalen der unabhängigen Patentansprüche gelöst. Weitere bevorzugte erfindungsgemäße Ausgestaltungen sind den abhängigen Patentansprüchen zu entnehmen.

### BESCHREIBUNG DER ERFINDUNG

Die erfindungsgemäße agrare Ausbringeinrichtung verfügt über Ausbringöffnungen. Die Ausbringöffnungen können beispielsweise von einer Ausbringventileinrichtung, einem Düsenkopf oder einer Feldspritze ausgebildet sein, s. den eingangs angeführten Stand der Technik. Die Ausbringöffnungen sind (bspw. an einem Sprühbalken) verteilt angeordnet, um das agrare Fluid über eine Breite oder eine Fläche aufzubringen, was auf einen Ackerboden, ein Feld oder auch eine Pflanze erfolgen kann. Hierbei erfolgt das Ausbringen vorzugsweise über ein Sprühen. Die Ausbringöffnungen werden dabei über ein fluidischen Versorgungsleitungssystem mit dem agraren Fluid (insbesondere unter einem konstanten, variablen, gesteuerten oder geregelten Druck) versorgt. Hierbei weist das Versorgungsleitungssystem eine Sammelleitung auf, in welcher das agrare Fluid gesammelt für die mehreren Ausbringöffnungen geführt wird. Von dieser Sammelleitung zweigen mehrere Ausbringleitungen ab, die jeweils zu einer Ausbringöffnung führen, wobei vorzugsweise in den Ausbringleitungen eine Ausbringventileinrichtung angeordnet ist, über welche die Ausbringung des agraren Fluids über die Ausbringöffnung gesteuert werden kann.

Erfindungsgemäß weist das Versorgungsleitungssystem zwei Durchflussmesser auf. Hierbei ist ein erster Durchflussmesser für eine Messung eines größeren Durchflusses bestimmt als der zweite Durchflussmesser, wozu der erste Durchflussmesser vorzugsweise über einen größeren Messbereich und/oder ein kleinere absolute Messgenauigkeit verfügt als der zweite Durchflussmesser. Der erste Durchflussmesser ist in der Sammelleitung angeordnet. Hingegen ist der zweite Durchflussmesser in einer Bypassleitung angeordnet, die einen Teilabschnitt der Sammelleitung umgeht.

Erfindungsgemäß ist eine Testventileinrichtung vorhanden, bei der es sich um ein einziges oder mehrere Ventile handelt, die als Ventileinheit ausgebildet sein können oder verteilt angeordnet sein können, ggf. mit weiteren fluidischen Bauelementen. Die Testventileinrichtung verfügt dabei über (mindestens zwei) unterschiedliche Betriebszustände, die je nachdem eingenommen werden, ob ein Betrieb der agraren Ausbringeinrichtung in einem Testbetrieb oder in einem Ausbringbetrieb erfolgen soll:
- In einem Testbetrieb erfolgt eine Überprüfung oder eine Kalibrierung einer Ausbringung des agraren Fluids aus lediglich einer Ausbringöffnung. Alternativ hierzu kann in dem Testbetrieb eine Überprüfung oder Kalibrierung der Ausbringen des agraren Fluids lediglich aus einer Teilgruppe der Ausbringöffnungen erfolgen. Zu diesem Zweck werden Ventile, die der Ausbringöffnung oder Teilgruppe der Ausbringöffnungen, aus denen das agrare Fluid für die Überprüfung oder Kalibrierung ausgebracht werden soll, in die Öffnungsstellung gebracht oder elektronisch in diese gesteuert, während die den anderen Ausbringöffnungen zugeordneten Ventile in die Sperrstellung gebracht oder elektronisch in diese gesteuert werden. In diesem Fall nimmt die Testventileinrichtung eine Überprüfungs- oder Kalibrierstellung derart ein, dass der von der Bypassleitung umgegangene Teilabschnitt der Sammelleitung abgesperrt ist, während das über die ausgewählte Ausbringöffnung oder Teilgruppe der Ausbringöffnungen ausgebrachte Fluid die Bypassleitung durchströmt. Dies hat zur Folge, dass mittels des zweiten Durchflussmessers eine Messung des Durchflusses in dem Überprüfungs- oder Kalibrierbetrieb erfolgt. Hierbei kann erfindungsgemäß der zweite Durchflussmesser spezifisch an die Durchflussrate angepasst werden, welche gegenüber einem Ausbringbetrieb mit der Ausbringung des Fluids über sämtliche Ausbringöffnungen reduziert ist. Es ist der Einsatz eines zweiten Durchflussmessers möglich, mit dem dann für die verringerte Durchflussrate eine Ermittlung des Durchflusses mit einer erhöhten Genauigkeit möglich ist.
- Hingegen ist die Testventileinrichtung für einen Ausbringbetrieb, in welchem die Ausbringung des Fluids über sämtliche Ausbringöffnungen erfolgt (wobei dies aber auch lediglich je nach Steuerung oder Regelung der einzelnen den Ausbringöffnungen vorgeordneten Ventile temporär der Fall sein kann) in eine Betriebsstellung bringbar, die auch als Ausbringstellung bezeichnet werden kann. In dieser Betriebsstellung ist der Teilabschnitt geöffnet, wobei dann die Bypassleitung über die Testventileinrichtung abgesperrt sein kann oder weiterhin geöffnet sein kann. Während des Ausbringbetriebs kann dann mittels des ersten Durchflussmessers der zumindest in Teilbetriebsbereichen erhöhte Durchfluss infolge der Ausbringung über sämtliche Ausbringöffnungen zuverlässig gemessen werden.

Für die Ausgestaltung der Testventileinrichtung gibt es vielfältige Möglichkeiten. So kann beispielsweise ein Ventil in Ausgestaltung als 3/2-Wegeventil Einsatz finden, welches je nach Betriebsstellung den von der Bypassleitung überbrückten Teilabschnitt aktiviert oder die Bypassleitung. Möglich ist beispielsweise auch, dass die Testventileinrichtung als in dem Teilabschnitt angeordnetes Sperrventil ausgebildet ist. Hierbei kann die Testventileinrichtung über ein manuell betätigtes Ventil, beispielsweise einen manuell betätigten, in dem Teilabschnitt angeordneten Kugelhahn, verfügen oder es kann eine elektronische Steuerung der Testventileinrichtung durch eine Steuereinheit erfolgen.

Für eine alternative Lösung der der Erfindung zugrunde liegenden Aufgabe erfolgt die Versorgung der Sammelleitung mit Fluid einerseits über eine Ausbringversorgungsleitung und andererseits über eine Testversorgungsleitung. Über die beiden Versorgungsleitungen kann dann vorzugsweise alternativ die Versorgung der Sammelleitung mit dem Fluid erfolgen. In diesem Fall ist der erste Durchflussmesser in der Ausbringversorgungsleitung oder in der Sammelleitung angeordnet, während der zweite Durchflussmesser in der Testversorgungsleitung angeordnet ist. Für diese Ausgestaltung wird in einem Testbetrieb für einen Test der Ausbringung des Fluids aus lediglich einer Ausbringöffnung oder lediglich aus einer Teilgruppe der Ausbringöffnungen die Sammelleitung ausschließlich über die Testversorgungsleitung mit Fluid versorgt. Dies hat zur Folge, dass in dem Testbetrieb eine Messung des Durchflusses mittels des zweiten Durchflussmessers erfolgt, der hinsichtlich des Messbereichs und/oder der Messgenauigkeit für die Durchflussrate in dem Testbetrieb, die kleiner ist als für die Ausbringung des Fluids über sämtliche Ausbringöffnungen, angepasst sein kann. Hingegen erfolgt in einem Ausbringbetrieb die Versorgung der Sammelleitung zumindest auch über die Ausbringversorgungsleitung mit Fluid, wobei vorzugsweise hierfür die Ausbringversorgungsleitung ausschließlich zuständig ist. Somit kann in dem Ausbringbetrieb die Messung des Durchflusses mittels des ersten Durchflussmessers erfolgen, der dann spezifisch an den Ausbringbetrieb angepasst sein kann.

Besondere Aufmerksamkeit wird gemäß einem weiteren Vorschlag der Erfindung der Bereitstellung des Fluids in dem Versorgungsleitungssystem gewidmet. Dies kann über geeignete Ventile oder fluidische Komponenten wie Drucksicherungsventile, Druckregelventile u. ä. erfolgen. Alternativ oder zusätzlich verfügt für einen Vorschlag der Erfindung die Ausbringeinrichtung über einen Windkessel, der (direkt oder indirekt) an die Sammelleitung angeschlossen ist. Ein Windkessel dient einer Speicherung von Fluid und dem Ausgleich von Druckschwankungen desselben. Ein Windkessel der hier einsetzbaren Art kann auch eine Hydrophore sein, wobei es sich um einen Druckbehälter handelt, in dem ein Gas, insbesondere Luft, im oberen Teil des Druckbehälters von unten von dem Fluid unter Druck gesetzt wird. Der Druck des Gases steht dann im Gleichgewicht mit dem Druck an der Oberfläche des Fluids. Einsatz finden kann auch ein so genannter Membrandruckbehälter.

Unter einem Testbetrieb wird hier einerseits ein Überprüfungsbetrieb verstanden, in welchem geprüft wird, ob ein Ausbringverhalten einem vorbestimmten Ausbringverhalten entspricht. So kann beispielsweise in einem Überprüfungsbetrieb geprüft werden, ob eine Ausbringöffnung, die Ausbringleitung oder ein der Ausbringöffnung vorgeordnetes Ventil einen verringerten oder verstopften Durchmesser infolge der Ablagerung von Verunreinigungen aufweist.

Andererseits wird unter einem Testbetrieb auch ein Kalibrierbetrieb verstanden, in welchem die Abhängigkeit einer Einstellung mindestens eines Betriebspunkts der Ausbringöffnung und mindestens eines vorgeordneten Ventils, also insbesondere eines Düsenkopfes oder einer Feldspritze, von einem steuernden Parameter ermittelt wird, wobei Ergebnis der Kalibrierung eine Proportionalitätskonstante, für unterschiedliche Betriebsbereiche unterschiedliche Proportionalitätskonstanten, eine zwischen Kalibrierpunkten linearisierte oder kurvenförmig angepasste Kalibrierkurve, ein Kalibrier-Kennfeld oder auch eine funktionale Abhängigkeit mit einer Ermittlung der Parameter der funktionalen Abhängigkeit mittels der Kalibrierung sein kann oder können.

Für einen weiteren Vorschlag ist die Versorgungsleitung, die die Sammelleitung in dem Ausbringbetrieb mit dem Fluid versorgt, über eine Pumpe mit einem Agrarfluidtank verbunden. Diese Verbindung kann lediglich in eine Versorgungsrichtung erfolgen. Möglich ist aber auch, dass diese in einem geschlossenen Kreislauf erfolgt mit einer Rückführleitung von der Sammelleitung zu dem Tank für die Rückführung überflüssigen, von der Pumpe bereitgestellten Fluids (vgl. auch den eingangs angeführten Stand der Technik).

Des Weiteren schlägt die Erfindung vor, dass die Testversorgungsleitung über eine Pumpe mit einem Testversorgungstank verbunden ist. Mittels dieser Pumpe, die u. U. auch spezifisch für den Testbetrieb ausgelegt ist und eine geeignete Durchflussrate bereitstellt, kann dann in dem Testbetrieb das Fluid bereitgestellt werden. Möglich ist hierbei, dass in dem Testversorgungstank für den Testbetrieb ein anderes Fluid angeordnet ist als in dem Agrarfluidtank. So kann in dem Testversorgungstank beispielsweise Frischwasser angeordnet werden, was zur Folge hat, dass die Kosten für den Testbetrieb reduziert werden können und im Testbetrieb auch keine Beaufschlagung einer Fläche, auf die im Testbetrieb das Fluid ausgebracht wird, mit einem agraren Fluid erfolgt, was zu einer Reduzierung der Menge des eingesetzten agraren Fluids und damit der Kosten und einer Vermeidung einer unerwünschten Beaufschlagung des Ausbringgebiets mit dem agraren Fluid führt.

Für die Ventileinrichtungen, die eingesetzt sind, um eine Umschaltung zwischen dem Testbetrieb und dem Ausbringbetrieb zu gewährleisten und/oder um zu vermeiden, dass in diesen Betriebsarten eine unerwünschte Wechselwirkung der Versorgung über die Testversorgungsleitung und die Ausbringversorgungsleitung erfolgt, die auch eine unerwünschte Beeinflussung der Testergebnisse zur Folge haben könnte, können beliebige Ventileinrichtungen Einsatz finden. Für einen besonderen Vorschlag der Erfindung sind in der Testversorgungsleitung und in der Ausbringversorgungsleitung jeweils ein Rückschlagventil angeordnet. Hierbei sind die Rückschlagventile jeweils in Richtung der Sammelleitung durchgängig. Mittels der Rückschlagventile kann somit die Bereitstellung von Fluid einerseits durch die Testversorgungsleitung im Testbetrieb und andererseits durch die Ausbringversorgungsleitung im Ausbringbetrieb gewährleistet werden. Andererseits vermeiden diese, dass Fluid unerwünscht von der Ausbringversorgungsleitung zu der Testversorgungsleitung gelangen kann (und umgekehrt).

Grundsätzlich können für die beiden Durchflussmesser Sensoren mit einem beliebigen (gleichen oder unterschiedlichen) Messprinzip eingesetzt werden. Für eine Ausführungsform der Erfindung ist (zumindest) der zweite Durchflussmesser als Ultraschall-Durchflussmesser ausgebildet. Eine derartige Ausgestaltung des Durchflussmessers hat sich als vorteilhaft herausgestellt, da in diesem keine durch die Strömung bewegten Teile eingesetzt sind, womit der Verschleiß reduziert ist und eine Wechselwirkung mit der Strömung nicht auftritt. Des Weiteren sind derartige Durchflussmesser u. U. vorteilhaft infolge einer hohen Reproduzierbarkeit der Messergebnisse, einer einfachen Reinigung, einer Manipulationssicherheit und/oder einer hohen chemischen Beständigkeit, wobei diese auch eine integrierte Leerrohrerkennung ermöglichen und in diesen ein gleichbleibender Strömungsquerschnitt über den gesamten Messkanal vorhanden sein kann. Vorzugsweise findet ein Ultraschall-Durchflussmesser Einsatz, bei dem ein auf einer Seite eines Strömungskanals angeordneter Transmitter ein Ultraschallsignal aussendet, welches von einem auf der anderen Seite des Strömungskanals angeordneten Empfänger das Ultraschallsignal empfängt. Eine zwischen dem ausgesendeten Signal und dem empfangenen Signal auftretende Phasendifferenz ist proportional zur Fließgeschwindigkeit. Für eine besondere Ausgestaltung findet ein Ultraschall-Durchflussmesser Einsatz, bei welchem auf beiden Seiten des Strömungskanals Einheiten eingesetzt sind, die jeweils sowohl ein Ultraschallsignal an die andere Einheit aussenden als auch ein Ultraschallsignal von der anderen Einheit empfangen. Hierbei kann ein zweiter Durchflussmesser Einsatz finden, dessen Messgenauigkeit kleiner als 10 ml/s, kleiner als 5 ml/s, 2 ml/s oder sogar kleiner als 1 ml/s ist. Um lediglich ein Beispiel zu nennen, kann ein Ultraschall-Durchflussmesser eingesetzt werden, wie dieser unter der Kennzeichnung "Flowmax 42i" (eingetragene Marke) von dem Unternehmen MIB GmbH, Breisach vertrieben wird. Möglich ist, dass mittels des Ultraschall-Durchflussmessers eine zusätzliche Kalibrierung des Sensors bei einem Wechsel des durchströmenden Fluids erfolgt, was mittels eines automatisierten Grundabgleichs bei ruhendem Fluid erfolgen kann oder durch manuelle Eingabe eines Umrechnungsfaktors oder einer Kennlinie, welche oder welcher spezifisch für das eingesetzte Fluid sind/ist.

Vorzugsweise sind den Ausbringöffnungen jeweils Ausbringventileinrichtungen vorgeordnet, in welchen mehrere Ventile angeordnet sein können und die als Einheit, u. U. auch mit der Ausbringöffnung selber und/oder einer Düse, ausgebildet sein können. Eine derartige Einheit, in welche die Ausbringventileinrichtung und auch die Ausbringöffnung integriert ist, kann auch als Spritzdüse ausgebildet sein. In der Ausbringventileinrichtung kann ein Magnetventil Einsatz finden, welches insbesondere mittels einer Pulsmodulation (insbesondere einer Pulsweitenmodulation) angesteuert wird. Des Weiteren möglich ist, dass ein vorzugsweise elektronisch angesteuertes Proportionalventil oder Sperrventil in der Ausbringventileinrichtung Einsatz finden, wobei auch die Kombination eines Proportionalventils oder eines pulsweitenmodulierten Ventils mit einem Sperrventil erfolgen kann. Des Weiteren möglich ist, dass die Ausbringventileinrichtung auch eine Steuereinrichtung beinhaltet, welche mit der Steuereinrichtung einer einer anderen Ausbringöffnung zugeordneten Ausbringventileinrichtung über ein Netzwerk kommuniziert und/oder mit einer zentralen Steuereinheit kommuniziert. Möglich ist hierbei, dass die Ausbringventileinrichtung so ausgebildet ist, wie dies in einer der Druckschriften EP 2 227 949 B2, DE 10 2010 001 881 B4, EP 2 511 783 B1, DE 10 2013 101 460 B3, EP 2 979 765 B1 oder der nicht vorveröffentlichten europäischen Patentanmeldung EP 18 189 451.0 beschrieben ist, wobei die vorgenannten Druckschriften hinsichtlich der Ausgestaltung der Ausbringventileinrichtung und deren Ansteuerung zum Gegenstand der vorliegenden Patentanmeldung gemacht werden.

Eine weitere Lösung der der Erfindung zugrunde liegenden Aufgabe stellt ein Verfahren zum Betrieb einer agraren Ausbringeinrichtung dar. Bei diesem Verfahren wird in einem Testbetrieb eine Ausbringventileinrichtung, die einer Ausbringöffnung vorgeordnet ist, oder werden Ausbringventileinrichtungen, die einer Teilgruppe von Ausbringöffnungen vorgeordnet sind, in eine Öffnungsstellung überführt, bei welcher es sich um eine Teilöffnungsstellung oder vollständige Öffnungsstellung handeln kann. Hingegen werden die Ausbringventileinrichtungen, die den anderen Ausbringöffnungen vorgeordnet sind, in eine Sperrstellung überführt. Für diese Betriebsstellungen der Ausbringventileinrichtungen wird dann mittels des zweiten Durchflussmessers der Durchfluss von Fluid durch die Ausbringöffnung oder die Teilgruppe von Ausbringöffnungen, deren Ausbringventileinrichtung(en) in der Öffnungsstellung ist/sind, gemessen. Hingegen wird in einem anderen Verfahrensschritt in dem Ausbringbetrieb, in dem das eigentliche bestimmungsgemäße Ausbringen eines agraren Fluids bspw. auf eine agrare Fläche erfolgt, der Durchfluss durch sämtliche Ausbringöffnungen mittels des ersten Durchflussmessers gemessen. Auf diese Weise kann beispielsweise eine Überprüfung dahingehend erfolgen, ob die Spritzdüse mit der mindestens einen Ausbringöffnung mit vorgeordneter Ausbringventileinrichtung in der Öffnungsstellung ordnungsgemäß funktioniert und diese beispielsweise nicht verstopft ist, was anhand des Messsignals des zweiten Durchflussmessers erfolgt.

Möglich ist, dass der Testbetrieb an einer spezifischen Ausbringöffnung oder der Teilgruppe von Ausbringöffnungen mit den zugeordneten Ausbringventileinrichtungen durchgeführt wird. Dieser Test kann werkseitig erfolgen, für eine Erstinbetriebnahme der agraren Ausbringeinrichtung erfolgen, turnusgemäß erfolgen, im Zuge von Wartungsarbeiten erfolgen oder bei dem Austausch des mittels der agraren Ausbringeinrichtung auszubringenden Fluids.

Möglich ist, dass in einem erfindungsgemäßen Verfahren sukzessive ein Testbetrieb für unterschiedliche Ausbringöffnungen mit zugeordneten Ausbringventileinrichtungen (oder Teilgruppen von Ausbringöffnungen mit zugeordneten Ausbringventileinrichtungen) erfolgt, so dass sukzessive eine Überprüfung und/oder Kalibrierung der Ausbringöffnung mit zugeordneter Ausbringventileinrichtung erfolgen kann. Somit wird anschließend an die Durchführung der zuvor erläuterten Verfahrensschritten in einem zweiten Testbetrieb eine zweite Ausbringventileinrichtung, die einer zweiten Ausbringöffnung vorgeordnet ist (und von der vorgenannten Ausbringöffnung abweicht) oder werden zweite Ausbringventileinrichtungen, die einer zweiten Teilgruppe von Ausbringöffnung vorgeordnet sind, in eine Öffnungsstellung überführt, während die den anderen Ausbringöffnungen vorgeordneten Ausbringventileinrichtungen in eine Sperrstellung überführt werden. Auch in diesem Fall kann dann derselbe zweite Durchflussmesser verwendet werden, um den Durchfluss von Fluid durch die zweite Ausbringöffnung oder Teilgruppe von Ausbringöffnungen zu messen. Möglich ist, dass dann sukzessive eine Messung des Durchflusses durch weitere Ausbringöffnungen oder Teilgruppen erfolgt, bis ein Test sämtlicher Ausbringöffnungen mit zugeordneten Ausbringventileinrichtungen erfolgt ist.

Die zuvor erläuterten Ergebnisse der Messung durch den zweiten Durchflussmesser können verwendet werden, um eine Grundfunktion der Ausbringöffnung und/oder der zugeordneten Ausbringventileinrichtung zu überprüfen, insbesondere eine Durchgängigkeit desselben und die Freiheit der Leitungsverbindungen von etwaigen Ablagerungen, womit Ergebnis der Überprüfungen ist, dass detektiert werden kann, ob sich die Ausbringöffnung mit zugeordneter Ausbringventileinrichtung in einem ordnungsgemäßen Zustand befindet. Möglich ist aber auch, dass eine Kalibrierung der Ausbringventileinrichtung mit zugeordneter Ausbringöffnung erfolgt.

Möglich ist für eine weiterer Ausgestaltung des erfindungsgemäßen Verfahrens, dass die Ausbringventileinrichtung mindestens zwei unterschiedliche Teilöffnungsstellungen aufweist. Die Zahl der unterschiedlichen Teilöffnungsstellungen ist dabei beliebig, wobei die Teilöffnungsstellungen auch stufenlose veränderbar sein können, beispielsweise bei Einsatz eines Proportionalventils. In dem erfindungsgemäßen Verfahren wird dann ein Kalibrierbetrieb einer Ausbringventileinrichtung (ggf. mit zugeordneter Ausbringöffnung) in unterschiedlichen Teilöffnungsstellungen durchgeführt. In diesem Fall kann dann anhand der von dem zweiten Durchflussmesser für die verschiedenen Teilöffnungsstellungen gemessenen Durchflüsse eine Kennlinie, ein Kennfeld oder eine Abhängigkeit der Ausbringventileinrichtung, u. U. einschließlich der Ausbringöffnung, ermittelt werden, welche dann für den Ausbringbetrieb verwendet werden kann zur Steuerung oder Regelung des Ausbringverhaltens der Ausbringventileinrichtung mit zugeordneter Ausbringöffnung.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1 und 3 bis 5**: zeigen schematisch unterschiedliche Ausführungsformen einer agraren Ausbringeinrichtung.
- **Fig. 2**: zeigt schematisch ein Verfahren zum Betrieb einer agraren Ausbringeinrichtung.

### FIGURENBESCHREIBUNG

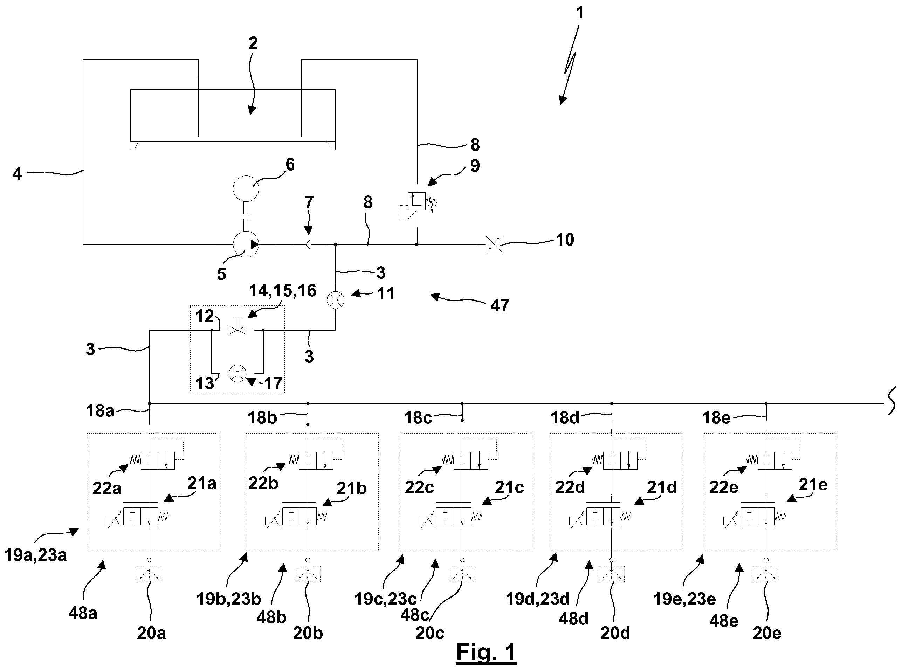

**Fig. 1** zeigt eine agrare Ausbringeinrichtung 1. In der agraren Ausbringeinrichtung 1 wird ein agrares Fluid über einen Agrarfluidtank 2 bereitgestellt. Einer Sammelleitung 3 wird agrares Fluid aus dem Agrarfluidtank 2 über eine Ausbringversorgungsleitung 4 zugeführt. Hierbei erfolgt eine Förderung durch eine in der Ausbringversorgungsleitung 4 angeordnete Pumpe 5, die von einem Motor 6 angetrieben wird. Stromabwärts der Pumpe 5 ist in der Ausbringversorgungsleitung 4 ein Rückschlagventil 7 angeordnet. Das Rückschlagventil 7 öffnet in Förderrichtung der Pumpe 5, womit dieses eine Förderung des agraren Fluids von dem Agrarfluidtank 2 zu der Sammelleitung 3 ermöglicht. Von der Ausbringversorgungsleitung 4 oder der Sammelleitung 3 zweigt eine Rückführleitung 8 ab, über welche permanent oder in Teilbetriebsbereichen überflüssiges von der Pumpe 5 gefördertes agrares Fluid, welches nicht ausgebracht wird, zu dem Agrarfluidtank 2 zurückgeführt werden kann. In der Rückführleitung 8 ist ein einstellbares Druckregelventil 9 angeordnet, welches mit dem Überschreiten eines bestimmungsgemäßen Drucks in der Sammelleitung 3 seine Öffnungsstellung einnimmt und somit bestimmungsgemäße Druckverhältnisse in der Sammelleitung 3 gewährleistet. Über einen Drucksensor 10 wird der Druck in der Ausbringversorgungsleitung 4, der Sammelleitung 3 oder der Rückführleitung 8 gemessen.

In der Sammelleitung 3 ist ein erster Durchflussmesser 11 angeordnet. Bei dem Durchflussmesser 11 kann es sich um einen Sensor handeln, der eine Strömungsgeschwindigkeit oder einen Massenstrom erfasst.

Ein Teilabschnitt 12 der Sammelleitung 3 ist durch eine Bypassleitung 13 umgangen. In dem Teilabschnitt 12 ist eine Testventileinrichtung 14 angeordnet, die hier als Sperrventil 15 ausgebildet ist, beispielsweise als manuell betätigbarer Absperrhahn 16. In der Bypassleitung 13 ist ein zweiter Durchflussmesser 17 angeordnet.

Die Sammelleitung 3 verzweigt in Ausbringleitungen 18a, 18b, ... Die Ausbringleitungen 18a, 18b, ... verfügen jeweils über eine Ausbringventileinrichtung 19a, 19b, ... mit nachgeordneten Ausbringöffnungen 20a, 20b, ... Die Ausbringleitungen 18a, 18b, ..., die Ausbringventileinrichtungen 19a, 19b, ... und die nachgeordneten Ausbringöffnungen 20a, 20b, ... bilden jeweils Ausbringstränge 48a, 48b, ... In den Ausbringsträngen 48a, 48b, ... kann durch geeignete elektronische Ansteuerung der Ausbringventileinrichtungen 19a, 19b, ... jeweils die Ausbringung des Fluids unabhängig voneinander und bedarfsgerecht (bspw. je nach Pflanzenbewuchs oder Unkraut im Bereich der Ausbringung) gesteuert oder geregelt werden, wobei eine Steuerung oder Regelung hinsichtlich der Ausbringrate und/oder der Tröpfchengröße (s. den eingangs genannten Stand der Technik) erfolgen kann.

Vorzugsweise sind die einzelnen Ausbringventileinrichtungen 19a, 19b, ... und die Ausbringöffnungen 20a, 20b, ... identisch ausgebildet.

Die Ausbringventileinrichtung 19 verfügt über ein Magnetventil 21. Bei diesem kann es sich um ein reines Sperrventil handeln. Vorzugsweise verfügt dieses aber über verschiedene Teilöffnungsquerschnitte oder bei diesem kann in der Art eines Proportionalventils stufenlos der Öffnungsquerschnitt verändert werden. Ebenfalls möglich ist, dass das Magnetventil 21 als pulsmoduliertes, insbesondere pulsweitenmoduliertes Ventil ausgebildet ist. Mittels des Magnetventils 21 kann die Ausbringrate des Fluids aus der Ausbringöffnung 20 gesteuert oder geregelt werden. Für den Fall einer Regelung kann in die Ausbringventileinrichtungen 19 oder in die Ausbringstränge 48 jeweils auch ein Drucksensor oder ein weiterer Durchflusssensor integriert sein.

Vorzugsweise ist dem Magnetventil 21 in der Ausbringventileinrichtung 19 ein Sperrventil 22 vorgeordnet. Das Sperrventil 22 wird vorzugsweise zur Vermeidung eines unerwünschten Tropfens des Fluids aus der Ausbringöffnung 20 eingesetzt. Möglich ist, dass das Sperrventil 22 ein elektronisch gesteuertes Magnetventil ist. Für das dargestellte Ausführungsbeispiel ist das Sperrventil 22 passiv ausgebildet, indem bei diesem der eingangsseitige Druck einem gegen die Wirkung einer Feder wirkenden Steueranschluss zugeführt wird, wobei das Sperrventil 22 in diesem Fall erst mit Überschreiten eines Schwellwerts des eingangsseitigen Drucks von seiner Sperrstellung in die Durchlassstellung gelangt.

Die Sammelleitung 3 wird als solche bezeichnet, da durch diese in dem Ausbringbetrieb gesammelt das Fluid strömt, welches für sämtliche Ausbringleitungen 18a, 18b, ... bestimmt ist.

Für das dargestellte Ausführungsbeispiel ist der erste Durchflussmesser stromaufwärts des Teilabschnitts 12 mit der Bypassleitung 13 angeordnet. Möglich ist allerdings auch, dass der erste Durchflussmesser 11 stromabwärts des Teilabschnitts 12 mit der Bypassleitung 13 in der Sammelleitung 3 angeordnet ist. Die Ausbringventileinrichtung 19 ist, insbesondere gemeinsam mit der Ausbringöffnung 20 und einer etwaigen Düse, die auch auswechselbar sein kann, Teil einer Ausbringeinheit 23.

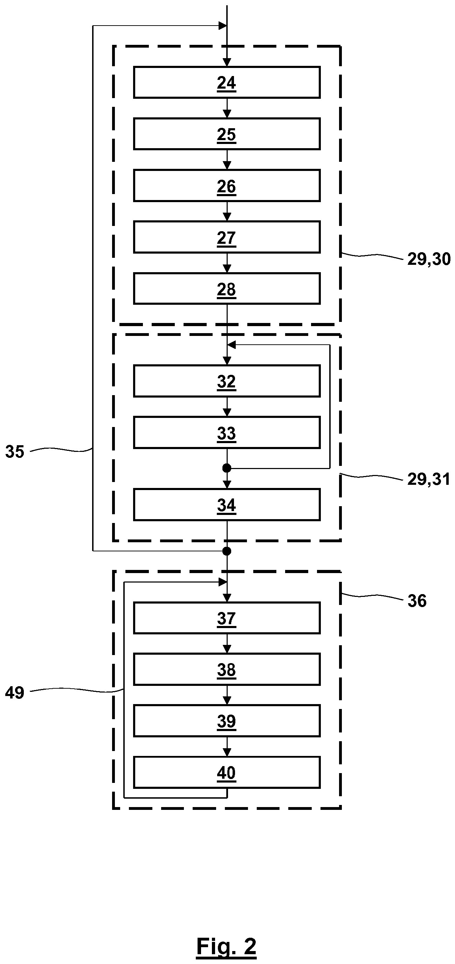

**Fig. 2** zeigt schematisch ein Verfahren zum Betrieb einer agraren Ausbringeinrichtung 1 (beispielsweise gemäß Fig. 1) mit einem Testbetrieb 29:
In einem Verfahrensschritt 24 wird eine Ausbringeinheit 23a, hier die Ausbringventileinrichtung 19a, in die Öffnungsstellung überführt, während die anderen Ausbringeinheiten 23b, 23c, ..., hier die Ausbringventileinrichtungen 19b, 19c, ... in die Schließstellung überführt werden. In einem Verfahrensschritt 25 wird dann die Testventileinrichtung 14 abgesperrt. Die Pumpe 5 wird dann in einem Verfahrensschritt 26 so angesteuert, dass in der Sammelleitung 3 ein vorbestimmter Druck erzeugt wird, was insbesondere mit dem Druckregelventil 9 und/oder auf Grundlage einer Regelung des Betriebs des Motors 6 auf Grundlage des Signals des Drucksensors 10 gewährleistet wird. Auf diese Weise erfolgt nur die Ausbringung von Fluid über den Ausbringstrang 48a, während die anderen Ausbringstränge 48b, 48c, ... abgesperrt sind.

In einem Verfahrensschritt 27 wird dann mittels des zweiten Durchflussmessers 17 der Durchfluss durch die Sammelleitung 3 gemessen, wobei der gemessene Durchfluss angesichts der Schließung der Ausbringeinheiten 23b, 23c, ... der Ausbringung des Fluids aus der Ausbringöffnung 20a und über den Ausbringstrang 48a entspricht.

Ergibt sich in der Öffnungsstellung der Ausbringventileinrichtung 19a der bestimmungsgemäße Durchlassquerschnitt, entspricht der von dem Durchflussmesser 17 gemessene Durchfluss einem Soll-Durchfluss. Ist hingegen ein Leitungsquerschnitt oder Ventil der Ausbringeinheit 23a geschlossen oder zumindest teilweise verstopft, weicht der von dem Durchflussmesser 17 gemessene Durchfluss von dem Soll-Durchfluss ab. Somit kann in einem Verfahrensschritt 28 auf Grundlage eines Vergleichs des gemessenen Durchflusses mit dem Soll-Durchfluss eine Überprüfung erfolgen, ob die Ausbringeinheit 23 ordnungsgemäße Durchtrittsquerschnitte bereitstellt. Die zuvor erläuterten Verfahrensschritte 24 bis 28 stellen einen Testbetrieb 29 in Form eines Überprüfungsbetriebs 30 dar.

Alternativ oder zusätzlich kann ein Testbetrieb 29 in Form eines Kalibrierbetriebs 31 wie folgt durchgeführt werden:
In einem Verfahrensschritt 32 erfolgt eine Ansteuerung der Ausbringventileinrichtung 19a derart, dass diese (insbesondere das Magnetventil 21a) eine erste Teilöffnungsstellung einnimmt. Für den Fall, dass das Magnetventil 21a als pulsmoduliertes Ventil ausgebildet ist, entspricht diese erste Teilöffnungsstellung einem ersten Tastverhältnis. Insbesondere nach Erreichen eines stabilen Strömungszustandes erfolgt dann in einem Verfahrensschritt 33 eine Messung einer ersten Durchflussmenge durch den Durchflussmesser 17. Hieran anschließend werden die Verfahrensschritte 32, 33 wiederholt, wobei dann aber eine zweite Teilöffnungsstellung, eine dritte Teilöffnungsstellung, ... der Ausbringventileinrichtung 19a herbeigeführt wird und für diese dann mit dem Durchflussmesser 17 ein zweiter Durchfluss, ein dritter Durchfluss, ... gemessen wird. Je nach gewünschter Genauigkeit der Kalibrierung wird die Zahl der unterschiedlichen Teilöffnungsstellungen bestimmt. Ist auf diese Weise eine Messung des Durchflusses für sämtliche angestrebten Teilöffnungsstellungen erfolgt, wird in einem Verfahrensschritt 34 dann eine Auswertung vorgenommen, bei welcher dann anhand des ersten Durchflusses, zweiten Durchflusses, ... in Zuordnung zu dem ersten Teilöffnungsquerschnitt, zweiten Teilöffnungsquerschnitt, ... eine Kennlinie, ein Kennfeld oder eine anderweitige Abhängigkeit einschließlich einer funktionalen Abhängigkeit mit einer Anpassung der Parameter der u. U. a-priori vorgegebenen Funktion ermittelt wird.

In dem Kalibrierbetrieb 31 werden somit die Verfahrensschritte 32 bis 34 ausgeführt. In dem Kalibrierbetrieb kann eine Kalibrierung der Ausbringventileinrichtung 19a mit zugeordneter Ausbringöffnung 20a erfolgen, welche gewährleistet, dass in einem Ausbringbetrieb für eine Aussteuerung einer Teilöffnungsstellung, die der Teilöffnungsstellung in dem Kalibrierbetrieb 31 entsprechen kann (oder auch hiervon abweichen kann), ein (u. U. extrapolierter) Kalibrierwert verwendet werden kann, der gewährleistet, dass in einem Ausbringbetrieb die gewünschte Ausbringung erfolgt. Andererseits kann auf Grundlage des Kalibrierbetriebs ermittelt werden, welche Teilöffnungsstellung der Ausbringventileinrichtung 19a herbeigeführt werden muss, wenn eine bestimmte Ausbringrate herbeigeführt werden soll.

Wurden wie erläutert der Überprüfungsbetrieb 30 und der Kalibrierbetrieb 31 durchlaufen, liegen die gewünschten Informationen für einen Ausbringstrang 48a, hier für die Ausbringventileinrichtung 19a mit zugeordneter Ausbringöffnung 20a, vor.

Hieran anschließend kann ein entsprechender Überprüfungsbetrieb sowie Kalibrierbetrieb jeweils einzeln für die weiteren Ausbringstränge 48b, 48c, ... ( hier die Ausbringventileinrichtungen 19b, 19c, ... mit zugeordneten Ausbringöffnungen 20b, 20c, ...) durchgeführt werden, bis eine Überprüfung und Kalibrierung sämtlicher Ausbringstränge 48 erfolgt ist. Die sukzessive Durchführung des Überprüfungsbetriebs 30 und Kalibrierbetriebs 31 für die jeweiligen Ausbringstränge ist in Fig. 2 mittels der Rückverzweigung 35 indiziert.

Wurden sämtliche Überprüfungsbetriebe 30 und Kalibrierbetriebe 31 durchgeführt, kann dann ein Ausbringbetrieb 36 der agraren Ausbringeinrichtung 1 erfolgen, in dem das agrare Fluid parallel über die Ausbringstränge 48a, 48b, ... beispielsweise auf das Feld aufgebracht wird.

In dem Ausbringbetrieb 36 werden in einem Verfahrensschritt 37 zunächst die Soll-Ausbringraten für die Ausbringung aus den Ausbringöffnungen 20a, 20b, ... ermittelt, die gleich oder unterschiedlich sein kann. Hierbei werden die einzelnen Soll-Ausbringraten beispielsweise ermittelt anhand der Geschwindigkeit des Fahrzeugs, mit dem die agrare Ausbringeinrichtung 1 bewegt wird, anhand eines GPS-Signals, anhand gespeicherter Daten zu einem vergangenen Ernteertrag in Zuordnung desselben zu der Position, an welcher sich eine Ausbringöffnung gerade befindet, anhand einer bspw. kamerabasierten Erkennung einer Wuchsgröße einer Pflanze, anhand einer Unterscheidung des Bewuchses (beispielsweise einer Unterscheidung zwischen Erntepflanze und Unkraut), anhand einer Grünerkennung u. ä. Auf Grundlage der derart ermittelten Soll-Ausbringraten wird dann in einem Verfahrensschritt 38 anhand der zuvor durchgeführten Kalibrierbetriebe, also anhand der ermittelten Kennlinie, des Kennfelds oder anderweitigen Abhängigkeit ermittelt, welche Teilöffnungsstellung jeweils die Ausbringventileinrichtungen 19a, 19b, ... einnehmen müssen, um die Soll-Ausbringrate herbeizuführen, und welche elektronische Ansteuerung somit für das Magnetventil 21a, 21b, ... gewählt werden muss. In dem Verfahrensschritt 39 erfolgt dann die Ausbringung des Fluids mit der entsprechenden (u. U. unterschiedlichen) Ansteuerung der Ausbringventileinrichtungen 19a, 19b,

In dem Ausbringbetrieb 36 erfolgt die Messung des Durchflusses durch die Sammelleitung 3 mittels des Durchflussmessers 11, der damit einen integralen Wert für die Gesamtausbringung aus sämtlichen Ausbringöffnungen 20a, 20b, ... misst. Hiermit ist u. U. auch eine zusätzliche Kontrollmöglichkeit gegeben: Entspricht der von dem Durchflussmesser 11 gemessene Gesamtdurchfluss der Soll-Ausbringung aus sämtlichen Ausbringöffnungen 20a, 20b, ..., so sind sämtliche Ausbringstränge 48 funktionsfähig und die gewählte Kalibrierung der Ausbringventileinrichtungen 19a, 19b, ... ist noch gültig. Ergibt sich aber ein verändertes Betriebsverhalten mindestens einer Ausbringventileinrichtung 19a, 19b, ... und/oder Ausbringöffnung 20a, 20b, ... (beispielsweise durch Ablagerung von Verschmutzungen, eine vollständige Verstopfung oder infolge eines Temperaturganges) so kann dies dadurch detektiert werden, dass der mit dem Durchflussmesser 11 gemessene Gesamtfluss von der Summe der Soll-Ausbringraten der einzelnen Ausbringstränge 48 abweicht. Wird eine derartige Abweichung festgestellt, kann eine erneute Durchführung eines Überprüfungsbetriebs 30 und/oder eines Kalibrierbetriebs 31 erforderlich sein.

Mit der weiteren Bewegung des Fahrzeugs über das Feld oder entlang der Pflanzen werden in dem Ausbringbetrieb 36 die Verfahrensschritte 37 bis 40 wiederholt (s. Rückverzweigung 49 in Fig. 2) unter Anpassung der jeweiligen Ansteuerungen der Ausbringventileinrichtungen 19a, 19b, ... zur Herbeiführung des gewünschten, mit der Zeit bzw. der Fahrstrecke variierenden und beispielsweise über die Breite sich verändernden Ausbringrate.

Vorzugsweise erfolgt die Durchführung der Verfahrensschritte, die Ansteuerung der Magnetventile 21a, 21b, ..., die Ansteuerung einer etwaigen elektronisch gesteuerten Testventileinrichtung 14 sowie die Ansteuerung des Motors 6 (worunter auch eine Regelung verstanden werden kann) durch mindestens eine Steuereinheit mit zugeordneter Steuerlogik. Hierbei kann es sich um eine zentrale Steuereinheit der agraren Ausbringeinrichtung 1 oder des Fahrzeugs handeln oder mehrere miteinander vernetzte Teilsteuereinheiten, die auch in die Ausbringeinheiten 23a, 23b, ... integriert sein können.

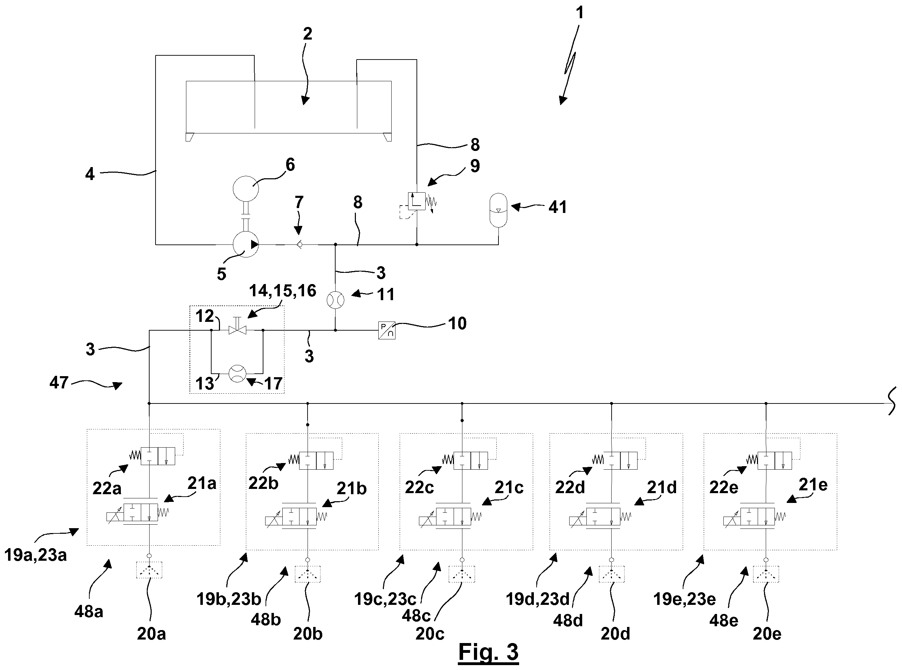

**Fig. 3** zeigt eine grundsätzlich dem Ausführungsbeispiel gemäß Fig. 1 entsprechende Ausgestaltung der agraren Ausbringeinrichtung 1. Allerdings erfasst hier der Drucksensor 10 den Druck in der Sammelleitung 3 nicht stromaufwärts des Durchflussmessers 11, sondern vielmehr stromabwärts desselben, hier zwischen dem Durchflussmesser 11 und der Verzweigung zu dem Teilabschnitt 12 und der Bypassleitung 13. Darüber hinaus ist mit der Sammelleitung 3, der Ausbringversorgungsleitung 4 oder der Rückführleitung 8 ein Windkessel 41 verbunden, der der Stabilisierung des Drucks in der Sammelleitung 3 dient.

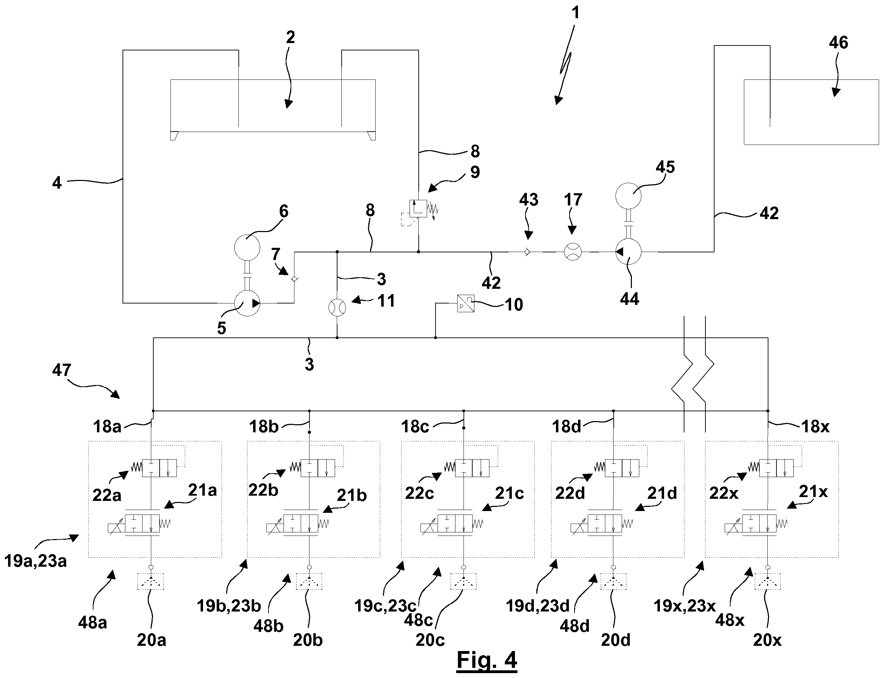

**Fig. 4** zeigt ein zu Fig. 1 und 3 alternatives Konzept einer agraren Ausbringeinrichtung 1, wobei aber für das Ausführungsbeispiel gemäß Fig. 4 bis auf Weiteres das zu den Fig. 1 und 3 Gesagte gilt. In der agraren Ausbringeinrichtung 1 verfügt die Sammelleitung 3 nicht über einen Teilabschnitt 12 mit Bypassleitung 13 und darin angeordnetem zweiten Durchflussmesser 17. Vielmehr ist hier die Ausbringversorgungsleitung 4, die Rückführleitung 8 oder die Sammelleitung 3 mit einer Testversorgungsleitung 42 verbunden. Somit kann der Sammelleitung 3 alternativ Fluid über die Ausbringversorgungsleitung 4 einerseits und die Testversorgungsleitung 42 andererseits zugeführt werden. In der Testversorgungsleitung 42 sind ein in Richtung der Sammelleitung 3 öffnendes Rückschlagventil 43, der zweite Durchflussmesser 17 und eine Pumpe 44 mit zugeordnetem Motor 45 angeordnet. Die Testversorgungsleitung 42 wird aus einem Testversorgungstank 46 mit einem von der Pumpe 44 geförderten Testfluid versorgt. Für das dargestellte Ausführungsbeispiel mündet die Testversorgungsleitung 42 stromaufwärts des ersten Durchflussmessers 11 in die Sammelleitung 3. Abweichend möglich ist aber auch, dass dies stromabwärts des ersten Durchflussmessers 11 (aber vor der Verzweigung zu den Ausbringleitungen 18a, 18b, ...) erfolgt. Hier verfügt die Sammelleitung 3 nicht über einen von einer Bypassleitung 13 umgangenen Teilabschnitt 12.

In einem Verfahren zur Durchführung eines Testbetriebs 29 für die agrare Ausbringeinrichtung 1 gemäß Fig. 4 erfolgt der Ausbringbetrieb so, wie dies für das Ausführungsbeispiel gemäß Fig. 1 und mit dem Verfahren gemäß Fig. 2 beschrieben worden ist. Allerdings wird in einem Testbetrieb 29 nicht das Fluid über die Ausbringversorgungsleitung 4 mittels der Pumpe 5 aus dem Agrarfluidtank 2 bereitgestellt. Vielmehr ist für den Testbetrieb 29 der agraren Ausbringeinrichtung 1 gemäß Fig. 4 die Pumpe 5 deaktiviert. Stattdessen wird die Pumpe 44 betrieben, so dass in dem Testbetrieb 29 die Bereitstellung des Fluids zu der Sammelleitung 3 ausschließlich aus dem Testversorgungstank 46 über die Testversorgungsleitung 42 erfolgt. Das in dem Testbetrieb 29 über eine Ausbringöffnung 20a (20b, 20c, ...) ausgebrachte Fluid durchströmt somit auch in diesem Fall den zweiten Durchflussmesser 17, so dass die anderen, zu Fig. 2 beschriebenen Verfahrensschritte zur Durchführung des Überprüfungsbetriebs 30 und/oder des Kalibrierbetriebs 31 entsprechend ausgeführt werden können. Möglich ist, dass in dem Testversorgungstank 46 eine andere Flüssigkeit angeordnet ist als in dem Agrarfluidtank 2, insbesondere Wasser.

Das Rückschlagventil 7 gewährleistet hierbei, dass in dem Testbetrieb 29 Fluid aus der Testversorgungsleitung 42 in die Ausbringversorgungsleitung 4 und den Agrarfluidtank 2 übertritt, während das Rückschlagventil 43 vermeidet, dass in dem Ausbringbetrieb 36 agrares Fluid aus dem Agrarfluidtank 2 und der Ausbringversorgungsleitung 4 in die Testversorgungsleitung 42 und den Testversorgungstank 46 übertritt.

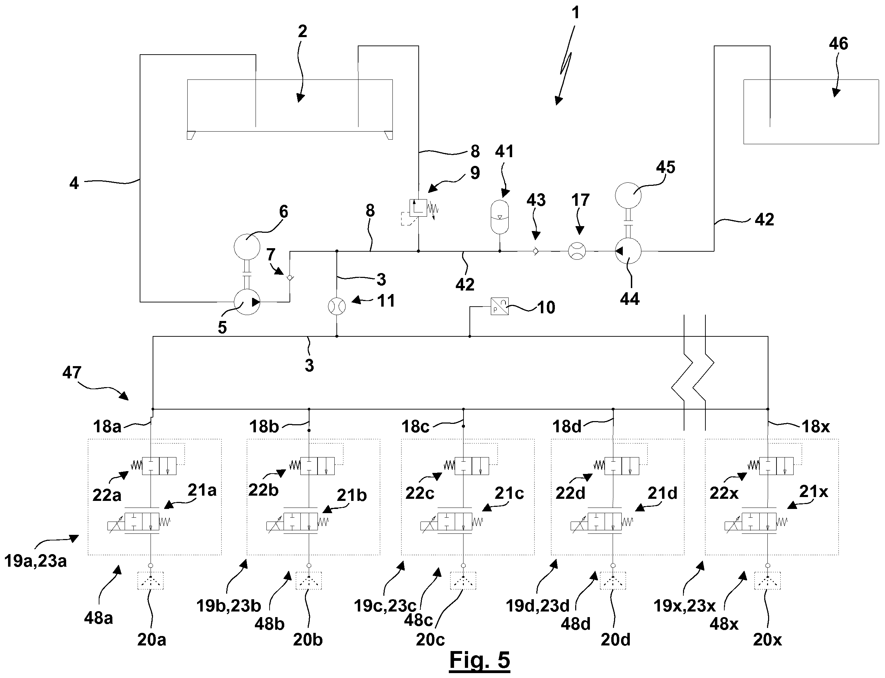

Die agrare Ausbringeinrichtung 1 gemäß Fig. 5 entspricht grundsätzlich der agraren Ausbringeinrichtung 1 gemäß Fig. 4. Allerdings ist hier (stromabwärts des Rückschlagventils 43) an die Testversorgungsleitung 42 zur Stabilisierung des Drucks sowohl in dem Testbetrieb 29 als auch in dem Ausbringbetrieb 36 ein Windkessel 41 angeschlossen.

Mit der Sammelleitung 3 und den von dieser abzweigenden Ausbringleitungen 18a, 18b, ... und den Ausbringsträngen 48a, 48b, ... ist ein Versorgungsleitungssystem 47 gebildet, welches ergänzend auch die Ausbringversorgungsleitung 4, die Rückführleitung 8 und/oder die Testversorgungsleitung 42 aufweisen kann.

In der vorliegenden Beschreibung werden teilweise für sich entsprechende Bauelemente dieselben Bezugszeichen verwendet, wobei diese dann mit ergänzenden Buchstaben a, b, ... voneinander unterschieden werden. Wird in diesem Fall mit einer Beschreibung auf das Bezugszeichen ohne den ergänzenden Buchstaben Bezug genommen, gilt diese Beschreibung für einzelne oder sämtliche mit diesem Bezugszeichen gekennzeichneten Bauelemente.

Möglich ist, dass die Durchflussmesser 11, 17 unterschiedliche Messgenauigkeiten und/oder Messbereiche aufweisen, wobei diese auf denselben Messprinzipien oder unterschiedlichen Messprinzipien basieren können. Vorzugsweise kann mit dem Durchflussmesser 11 ein Durchfluss gemessen werden, der mindestens fünfmal, mindestens zehnmal oder sogar mindestens 20-mal größer ist als der maximale Durchfluss, der mit dem Durchflussmesser 17 gemessen werden kann. Alternativ oder zusätzlich möglich ist, dass die absolute Messgenauigkeit des Durchflussmessers 17 mindestens fünfmal, mindestens zehnmal oder sogar mindestens 20-mal größer ist als die absolute Messgenauigkeit des Durchflussmessers 11.

### BEZUGSZEICHENLISTE

- 1: agrare Ausbringeinrichtung
- 2: Agrarfluidtank
- 3: Sammelleitung
- 4: Ausbringversorgungsleitung
- 5: Pumpe
- 6: Motor
- 7: Rückschlagventil
- 8: Rückführleitung
- 9: Druckregelventil
- 10: Drucksensor
- 11: erster Durchflussmesser
- 12: Teilabschnitt
- 13: Bypassleitung
- 14: Testventileinrichtung
- 15: Sperrventil
- 16: Absperrhahn
- 17: zweiter Durchflussmesser
- 18: Ausbringleitung
- 19: Ausbringventileinrichtung
- 20: Ausbringöffnung
- 21: Magnetventil
- 22: Sperrventil
- 23: Ausbringeinheit
- 24: Verfahrensschritt
- 25: Verfahrensschritt
- 26: Verfahrensschritt
- 27: Verfahrensschritt
- 28: Verfahrensschritt
- 29: Testbetrieb
- 30: Überprüfungsbetrieb
- 31: Kalibrierbetrieb
- 32: Verfahrensschritt
- 33: Verfahrensschritt
- 34: Verfahrensschritt
- 35: Rückverzweigung
- 36: Ausbringbetrieb
- 37: Verfahrensschritt
- 38: Verfahrensschritt
- 39: Verfahrensschritt
- 40: Verfahrensschritt
- 41: Windkessel
- 42: Testversorgungsleitung
- 43: Rückschlagventil
- 44: Pumpe
- 45: Motor
- 46: Testversorgungstank
- 47: Versorgungsleitungssystem
- 48: Ausbringstrang
- 49: Rückverzweigung

## Patentansprüche

1. Agrare Ausbringeinrichtung (1) für ein Fluid mit mehreren verteilt angeordneten Ausbringöffnungen (20), die über ein fluidisches Versorgungsleitungssystem (47) mit dem Fluid versorgt werden, wobei das Versorgungsleitungssystem (47) eine Sammelleitung (3) aufweist, von welcher mehrere Ausbringleitungen (18) abzweigen, welche jeweils zu einer zugeordneten Ausbringöffnung (20) führen,
**dadurch gekennzeichnet, dass**
a) das Versorgungsleitungssystem (47) einen ersten Durchflussmesser (11) aufweist und einen zweiten Durchflussmesser (17) aufweist, wobei der erste Durchflussmesser (11) für eine Messung eines größeren Durchflusses bestimmt ist als der zweite Durchflussmesser (17),
b) der erste Durchflussmesser (11) in der Sammelleitung (3) oder stromaufwärts derselben angeordnet ist und
c) der zweite Durchflussmesser (17) in einer einen Teilabschnitt (12) der Sammelleitung (3) umgehenden Bypassleitung (13) angeordnet ist,
d) eine Testventileinrichtung (14) vorhanden ist, welche
da) für einen Testbetrieb (29) für einen Test einer Ausbringung des Fluids aus lediglich einer Ausbringöffnung (20) oder lediglich aus einer Teilgruppe der Ausbringöffnungen (20) in eine Betriebsstellung bringbar ist, in welcher der Teilabschnitt (12) abgesperrt ist und das Fluid die Bypassleitung (13) durchströmt, und
db) für einen Ausbringbetrieb (36) in eine Betriebsstellung bringbar ist, in welcher der Teilabschnitt (12) geöffnet ist, so dass das Fluid den Teilabschnitt (12) durchströmt.

2. Agrare Ausbringeinrichtung (1) nach Anspruch 1, **dadurch gekennzeichnet, dass** die Testventileinrichtung (14) als in dem Teilabschnitt (12) angeordnetes Sperrventil (15) ausgebildet ist.

3. Agrare Ausbringeinrichtung (1) für ein agrares Fluid mit mehreren verteilt angeordneten Ausbringöffnungen (20), die über ein fluidisches Versorgungsleitungssystem (47) mit dem Fluid versorgt werden, wobei das Versorgungsleitungssystem (47) eine Sammelleitung (3) aufweist, von welcher mehrere Ausbringleitungen (18) abzweigen, welche jeweils zu einer zugeordneten Ausbringöffnung (20) führen,
**dadurch gekennzeichnet, dass**
a) das Versorgungsleitungssystem (47) einen ersten Durchflussmesser (11) aufweist und einen zweiten Durchflussmesser (17) aufweist, wobei der erste Durchflussmesser (11) für eine Messung eines größeren Durchflusses bestimmt ist als der zweite Durchflussmesser (17),
b) die Sammelleitung (3) über eine Ausbringversorgungsleitung (4) und eine Testversorgungsleitung (42) mit Fluid versorgt wird,
c) der erste Durchflussmesser (11) in der Ausbringversorgungsleitung oder in der Sammelleitung angeordnet ist,
d) der zweite Durchflussmesser (17) in der Testversorgungsleitung (42) angeordnet ist,
e) in einem Testbetrieb (29) für einen Test einer Ausbringung des Fluids aus lediglich einer Ausbringöffnung (20) oder lediglich aus einer Teilgruppe der Ausbringöffnungen (20) die Sammelleitung (3) ausschließlich über die Testversorgungsleitung (42) mit Fluid versorgt wird und
f) in einem Ausbringbetrieb (36) die Sammelleitung (3) zumindest auch über die Ausbringversorgungsleitung (4) mit Fluid versorgt wird.

4. Agrare Ausbringeinrichtung (1) nach einem der vorhergehenden Ansprüche, **dadurch gekennzeichnet, dass** an die Sammelleitung (3), die Ausbringversorgungsleitung (4), die Rückführleitung (8) und/oder die Testversorgungsleitung (42) ein Windkessel (41) angeschlossen ist.

5. Agrare Ausbringeinrichtung (1) nach einem der vorhergehenden Ansprüche, **dadurch gekennzeichnet, dass** die oder eine Ausbringversorgungsleitung (4), die die Sammelleitung (3) in dem Ausbringbetrieb (36) mit dem Fluid versorgt, eine Pumpe (5) aufweist und mit einem Agrarfluidtank (2) verbunden ist.

6. Agrare Ausbringeinrichtung (1) nach einem der Ansprüche 3 bis 5, **dadurch gekennzeichnet, dass** die Testversorgungsleitung (5) eine Pumpe (44) aufweist und mit einem Testversorgungstank (46) verbunden ist.

7. Agrare Ausbringeinrichtung (1) nach einem der Ansprüche 3 bis 6, **dadurch gekennzeichnet, dass** in der Testversorgungsleitung (42) und in der Ausbringversorgungsleitung (4) jeweils ein Rückschlagventil (7, 43) angeordnet ist, wobei die Rückschlagventile (7, 43) jeweils in Richtung der Sammelleitung (3) durchgängig sind.

8. Agrare Ausbringeinrichtung (1) nach einem der vorhergehenden Ansprüche, **dadurch gekennzeichnet, dass** der zweite Durchflussmesser (17) als Ultraschall-Durchflussmesser ausgebildet ist.

9. Agrare Ausbringeinrichtung (1) nach einem der vorhergehenden Ansprüche, **dadurch gekennzeichnet, dass** den Ausbringöffnungen (20) jeweils eine Ausbringventileinrichtung (19) vorgeordnet ist.

10. Verfahren zum Betrieb einer agraren Ausbringeinrichtung (1) nach Anspruch 9, **dadurch gekennzeichnet, dass**
a) in einem Testbetrieb (29) eine Ausbringventileinrichtung (19a), die einer Ausbringöffnung (20a) vorgeordnet ist, oder Ausbringventileinrichtungen, die einer Teilgruppe von Ausbringöffnungen vorgeordnet sind, in eine Öffnungsstellung überführt wird oder werden, während die den anderen Ausbringöffnungen (20) vorgeordneten Ausbringventileinrichtungen (19) in eine Sperrstellung überführt werden, und mittels des zweiten Durchflussmessers (17) der Durchfluss von Fluid durch die Ausbringöffnung (20a) oder Teilgruppe von Ausbringöffnungen gemessen wird, und
b) in einem Ausbringbetrieb (36) der Durchfluss durch sämtliche Ausbringöffnungen (20) mittels des ersten Durchflussmessers (11) gemessen wird.

11. Verfahren nach Anspruch 10, **dadurch gekennzeichnet, dass** in einem folgenden zweiten Testbetrieb (29) eine zweite Ausbringventileinrichtung (19b), die einer zweiten Ausbringöffnung (20b) vorgeordnet ist, oder zweite Ausbringventileinrichtungen, die einer zweiten Teilgruppe von Ausbringöffnungen vorgeordnet sind, in eine Öffnungsstellung überführt wird oder werden, während die den anderen Ausbringöffnungen (20) vorgeordneten Ausbringventileinrichtungen (19) in eine Sperrstellung überführt werden, und mittels des zweiten Durchflussmessers (17) der Durchfluss von Fluid durch die zweite Ausbringöffnung (20b) oder Teilgruppe von Ausbringöffnungen gemessen wird.

12. Verfahren zum Betrieb einer agraren Ausbringeinrichtung (1) nach Anspruch 9, insbesondere Verfahren nach einem der Ansprüche 10 und 11, **dadurch gekennzeichnet, dass**
a) die Ausbringventileinrichtungen (19) jeweils unterschiedliche Teilöffnungsstellungen aufweisen,
b) ein Kalibrierbetrieb (31) einer Ausbringventileinrichtung (19a) in unterschiedlichen Teilöffnungsstellungen durchgeführt wird und
c) anhand der von dem zweiten Durchflussmesser (17) in den unterschiedlichen Teilöffnungsstellungen gemessenen Durchflüsse eine Kennlinie, ein Kennfeld oder eine Abhängigkeit der Ausbringventileinrichtung (19a) ermittelt wird.

## Claims

1. Agricultural spreading device (1) for a fluid with multiple distributed spreading openings (20), which are supplied with fluid by a fluidic supply line system (47), the supply line system (47) comprising a common line (3), from which multiple spreading lines (18) branch off, which each lead to an associated spreading opening (20),
**characterized in that**
a) the supply line system (47) comprises a first flow meter (11) and comprises a second flow meter (17) and the first flow meter (11) is designated for measuring a higher flow than the second flow meter (17),
b) the first flow meter (11) is positioned in the common line (3) or upstream of the same and
c) the second flow meter (17) is positioned in a bypass line (13), which bypasses a subsection (12) of the common line (3),
d) a test valve device (14) is present, which,
da) for a test operation (29) for a test of a spreading of the fluid from only one spreading opening (20) or only a subgroup of the spreading openings (20) can be brought into an operating position, in which the subsection (12) is closed and the fluid flows through the bypass line (13) and
db) for a spreading operation (36) can be brought into an operating position, in which the subsection (12) is open so the fluid flows through the subsection (12).

2. Agricultural spreading device (1) according to claim 1, **characterized in that** the test valve device (14) is embodied as a stop valve (15) arranged in the subsection (12).

3. Agricultural spreading device (1) for an agricultural fluid with multiple distributed spreading openings (20), which are supplied with fluid by a fluidic supply line system (47), the supply line system (47) comprising a common line (3), from which multiple spreading lines (18) branch off, which each lead to an associated spreading opening (20),
**characterized in that**
a) the supply line system (47) comprises a first flow meter (11) and comprises a second flow meter (17) and the first flow meter (11) is designated for measuring a higher flow than the second flow meter (17),
b) the common line (3) is supplied with fluid by a spreading supply line (4) and a test supply line (42),
c) the first flow meter (11) is arranged in the spreading supply line or in the common line,
d) the second flow meter (17) is arranged in the test supply line (42),
e) in a test operation (29) for a test of the spreading of the fluid from only one spreading opening (20) or only a subgroup of the spreading openings (20) the common line (3) is exclusively supplied with fluid by the test supply line (42) and
f) in a spreading operation (36) the common line (3) is supplied with fluid at least also by the spreading supply line (4).

4. Agricultural spreading device (1) according to one of the preceding claims, **characterized in that** an air vessel (41) is connected to the common line (3), the spreading supply line (4), the feedback line (8) and/or the test supply line (42).

5. Agricultural spreading device (1) according to one of the preceding claims, **characterized in that** the or a spreading supply line (4) which supplies the common line (3) in the spreading operation (36) with fluid comprises a pump (5) and is connected to an agricultural fluid tank (2).

6. Agricultural spreading device (1) according to one of the claims 3 to 5, **characterized in that** the test supply line (5) comprises a pump (44) and is connected to a test supply tank (46).

7. Agricultural spreading device (1) according to one of the claims 3 to 6, **characterized in that** in the test supply line (42) and in the spreading supply line (4) each a check valve (7, 43) is arranged, and the check valves (7, 43) each opening towards the common line (3).

8. Agricultural spreading device (1) according to one of the preceding claims, **characterized in that** the second flow meter (17) is embodied as an ultrasonic flow meter.

9. Agricultural spreading device (1) according to one of the preceding claims, **characterized in that** upstream of the spreading openings (20) each a spreading valve device (19) is arranged.

10. Method for operating an agricultural spreading device (1) according to claim 9, **characterized in that**,
a) in a test operation (29) a spreading valve device (19a), which is arranged upstream of a spreading opening (20a), or spreading valve devices, which are arranged upstream of a subgroup of spreading openings, is or are transferred into an open position, while the spreading valve devices (19), which are positioned upstream of the other spreading openings (20), are transferred into a closed position, and the flow of fluid through the spreading opening (20a) or subgroup of spreading opening is measured by the second flow meter (17), and
b) in a spreading operation (36) the flow through all spreading openings (20) is measured by the first flow meter (11).

11. Method according to claim 10, **characterized in that** in a following second test operation (29) a second spreading valve device (19b), which is arranged upstream of a second spreading opening (20b), or second valve devices, which are arranged upstream of a second subgroup of spreading openings, is or are transferred into an open position, while the spreading valve devices (19), which are arranged upstream of the other spreading openings (20), are transferred into a closed position, and the flow of fluid through the second spreading opening (20b) or subgroup of spreading openings is measured by the second flow meter (17).

12. Method for operating an agricultural spreading device (1) according to claim 9, in particular method according to one of the claims 10 and 11, **characterized in that**,
a) the spreading valve devices (19a, 19b, ...) each comprise different partly open positions,
b) a calibrating operation (31) of a spreading valve device (19a) is carried out in different partly open positions and
c) a characteristic curve, a characteristic map or a dependency of the spreading valve device (19a) is determined on the basis of the flows measured by the second flow meter (17) in different partly open positions.

## Revendications

1. Dispositif d'épandage agricole (1) pour un fluide, avec plusieurs ouvertures d'épandage (20) disposées de manière répartie, qui sont alimentées, par l'intermédiaire d'un système à conduite d'alimentation fluidique (47), avec le fluide, dans lequel le système à conduite d'alimentation (47) comprend une conduite collectrice (3) d'où bifurquent plusieurs conduites d'épandage (18), qui conduisent chacune à une ouverture d'épandage (20) correspondante,
**caractérisé en ce que**
a) le système à conduite d'alimentation (47) comprend un premier débitmètre (11) et un deuxième débitmètre (17), dans lequel le premier débitmètre (11) est conçu pour la mesure d'un débit supérieur à celui que mesure le deuxième débitmètre (17),
b) le premier débitmètre (11) est disposé dans la conduite collectrice (3) ou en amont de celle-ci et
c) le deuxième débitmètre (17) est disposé dans une conduite de dérivation (13) entourant une portion (12) de la conduite collectrice (3),
d) un dispositif à soupape de test (14) existe, qui
da) peut être amené, pour un fonctionnement de test (29) pour un test d'épandage du fluide, à partir de seulement une ouverture d'épandage (20) ou de seulement un groupe partiel d'ouvertures d'épandage (20), vers une position de fonctionnement, dans laquelle la portion (12) est bloquée et le fluide traverse la conduite de dérivation (13) et
db) peut être amené, pour un fonctionnement d'épandage (36), dans une position de fonctionnement, dans lequel la portion (12) est ouverte, de sorte que le fluide traverse la portion (12).

2. Dispositif d'épandage agricole (1) selon la revendication 1, **caractérisé en ce que** le dispositif de soupape de test (14) est conçu comme une soupape d'arrêt (15) disposée dans la portion (12).

3. Dispositif d'épandage agricole (1) pour un fluide agricole, avec plusieurs ouvertures d'épandage (20) disposées de manière répartie, qui sont alimentées, par l'intermédiaire d'un système à conduite d'alimentation fluidique (47), avec le fluide, dans lequel le système à conduite d'alimentation (47) comprend une conduite collectrice (3) d'où bifurquent plusieurs conduites d'épandage (18), qui conduisent chacune à une ouverture d'épandage (20) correspondante,
**caractérisé en ce que**
a) le système à conduite d'alimentation (47) comprend un premier débitmètre (11) et un deuxième débitmètre (17), dans lequel le premier débitmètre (11) est conçu pour la mesure d'un débit supérieur à celui que mesure le deuxième débitmètre (17),
b) la conduite collectrice (3) est alimentée en fluide par l'intermédiaire d'une conduite d'alimentation d'épandage (4) et une conduite d'alimentation de test (42),
c) le premier débitmètre (11) est disposé dans la conduite d'alimentation d'épandage ou dans la conduite collectrice,
d) le deuxième débitmètre (17) est disposé dans la conduite d'alimentation de test (42),
e) dans un fonctionnement de test (29) pour un test d'épandage du fluide, à partir de seulement une ouverture d'épandage (20) ou de seulement un groupe partiel d'ouvertures d'épandage (20), la conduite collectrice (3) est alimentée en fluide exclusivement par l'intermédiaire de la conduite d'alimentation de test (42) et
f) dans un fonctionnement d'épandage (36), la conduite collectrice (3) est alimentée en fluide au moins également par l'intermédiaire de la conduite d'alimentation d'épandage (4).

4. Dispositif d'épandage agricole (1) selon l'une des revendications précédentes, **caractérisé en ce que**, à la conduite collectrice (3), à la conduite d'alimentation d'épandage (4), à la conduite de retour (8) et/ou à la conduite d'alimentation de test (42), est raccordé un réservoir d'air (41).

5. Dispositif d'épandage agricole (1) selon l'une des revendications précédentes, **caractérisé en ce que** la ou une conduite d'alimentation d'épandage (4), qui alimente en fluide la conduite collectrice (3) dans le fonctionnement d'épandage (36), comprend une pompe (5) et est reliée avec un réservoir de fluide agricole (2).

6. Dispositif d'épandage agricole (1) selon l'une des revendications 3 à 5, **caractérisé en ce que** la conduite d'alimentation de test (5) comprend une pompe (44) et est reliée avec un réservoir d'alimentation de test (46).

7. Dispositif d'épandage agricole (1) selon l'une des revendications 3 à 6, **caractérisé en ce que**, dans la conduite d'alimentation de test (42) et dans la conduite d'alimentation d'épandage (4), est disposée respectivement un clapet anti-retour (7, 43), dans lequel les clapets anti-retour (7, 43) sont traversants respectivement dans la direction de la conduite collectrice (3).

8. Dispositif d'épandage agricole (1) selon l'une des revendications précédentes, **caractérisé en ce que** le deuxième débitmètre (17) est conçu comme un débitmètre à ultrasons.

9. Dispositif d'épandage agricole (1) selon l'une des revendications précédentes, **caractérisé en ce que**, en amont de chacune des ouvertures d'épandage (20), est disposé un dispositif à soupape d'épandage (19).

10. Procédé de fonctionnement d'un dispositif d'épandage agricole (1) selon la revendication 9, **caractérisé en ce que**
a) dans un fonctionnement de test (29), un dispositif à soupape d'épandage (19a), qui est disposé en amont d'une ouverture d'épandage (20a), ou des dispositifs à soupapes d'épandage, qui sont disposés en amont d'ouvertures d'épandage, est ou sont mis dans une position d'ouverture, tandis que les dispositifs à soupapes d'épandage (19) disposés en amont des autres ouvertures d'épandage (20) sont mis dans une position de blocage et, au moyen du deuxième débitmètre (17), le débit de fluide à travers l'ouverture d'épandage (20a) ou un groupe partiel d'ouvertures d'épandage est mesuré et
b) dans un fonctionnement d'épandage (36), le débit à travers toutes les ouvertures d'épandage (20) est mesuré au moyen du premier débitmètre (11).

11. Procédé selon la revendication 10, **caractérisé en ce que**, dans un deuxième fonctionnement de test (29) suivant, un deuxième dispositif à soupape d'épandage (19b), qui est disposé en amont d'une deuxième ouverture d'épandage (20b), ou des deuxièmes dispositifs à soupapes d'épandage, qui sont disposés en amont d'un deuxième groupe partiel d'ouvertures d'épandage, est ou sont mis dans une position d'ouverture, tandis que les dispositifs à soupapes d'épandage (19) disposés en amont des autres ouvertures d'épandage (20) sont mis dans une position de blocage et, au moyen du deuxième débitmètre (17), le débit de fluide à travers la deuxième ouverture d'épandage (20b) ou d'un groupe partiel d'ouvertures d'épandage est mesuré.

12. Procédé de fonctionnement d'un dispositif d'épandage agricole (1) selon la revendication 9, plus particulièrement procédé selon l'une des revendications 10 et 11, **caractérisé en ce que**
a) les dispositifs à soupapes d'épandage (19) présentent respectivement des positions d'ouverture partielle différentes,
b) un fonctionnement de calibrage (31) d'un dispositif à soupape d'épandage (19a) est effectué dans différentes positions d'ouverture partielle et
c) à l'aide des débits mesurés par le deuxième débitmètre (17) dans les différentes positions d'ouverture partielle, une courbe caractéristique, un diagramme caractéristique ou une dépendance du dispositif à soupape d'épandage (19a) est déterminé.
